# EUROPEAN PATENT APPLICATION

(11) **EP 4 708 291 A1**
(43) Date of publication of application: **11.03.2026**
(21) Application number: 24814402.4
(22) Date of filing: 27.05.2024
(51) Int. Cl.: G11B 15/32

(54) **TAPE DRIVE, MAGNETIC TAPE, AND STORAGE SYSTEM**

(30) Priority: 31.05.2023 CN 202310648112; 24.08.2023 CN 202311077106
(71) Applicant: Huawei Technologies Co., Ltd., Shenzhen, Guangdong 518129 (CN)
(72) Inventor: HE, Jiaqi, Shenzhen, Guangdong 518129 (CN); CHEN, Can, Shenzhen, Guangdong 518129 (CN); TANG, Kun, Shenzhen, Guangdong 518129 (CN); QIN, Tianyi, Shenzhen, Guangdong 518129 (CN); CHEN, Anwen, Shenzhen, Guangdong 518129 (CN)
(74) Representative: Pfenning, Meinig & Partner mbB
(86) International application number: PCT/CN2024/095622
(87) International publication number: WO 2024/245205

(57) **Abstract**

This application discloses a tape drive, a tape, and a storage system, and relates to a computer field. The tape drive includes a first take-up reel and a second take-up reel that are in a stacking layout and that rotate around respective rotation axes, where the first take-up reel and the second take-up reel wind a tape body, and the respective rotation axes coincide or do not coincide. When the first take-up reel and the second take-up reel rotate, the tape body is driven to be transported from the first take-up reel to the second take-up reel. A tape header and roller structures are disposed on a transport path of the tape body between the first take-up reel and the second take-up reel. The tape header performs a read operation or a write operation on the tape, and the roller structures support the tape body. The take-up reels are in the stacking layout, the take-up reels winding the tape body are stacked in a direction of the rotation axis, and the take-up reels are disposed in a vacant area in the tape drive, so that space utilization of the tape drive is improved. In comparison with a tape drive of a same space size, the tape drive provided in this application effectively improves storage capacity density of the tape drive, that is, improves a storage capacity of the tape drive.

## Description

This application claims priority to Chinese Patent Application No. 202310648112.7, filed with China National Intellectual Property Administration on May 31, 2023, and entitled "TAPE", and to Chinese Patent Application No. 202311077106.7, filed with China National Intellectual Property Administration on August 24, 2023, and entitled "TAPE DRIVE, TAPE, AND STORAGE SYSTEM", both of which are incorporated herein by reference in their entireties.

### TECHNICAL FIELD

This application relates to a computer field, and in particular, to a tape drive, a tape, and a storage system.

### BACKGROUND

Currently, due to low costs and low energy consumption of tape storage, the tape storage is still widely used for long-term offline archiving. Based on a linear tape open tape storage technology, when a tape body moves between a reel in a tape and a reel in a tape drive, a tape header moves in a width direction relative to the tape body, to implement a read operation and a write operation on the tape body. Because a moving range of the tape header is far greater than a width of the tape body, the tape drive includes a vacant area that is not covered by the tape body. As a result, space utilization of the tape drive is low and capacity density of the tape drive is reduced.

### SUMMARY

This application provides a tape drive, a tape, and a storage system, to improve space utilization of the tape drive, so as to improve capacity density of the tape drive.

According to a first aspect, a tape drive is provided, including a first take-up reel and a second take-up reel that rotate around respective rotation axes. The first take-up reel and the second take-up reel are in a stacking layout, and the first take-up reel and the second take-up reel wind a tape body. The first reel can rotate around a first rotation axis, the second reel can rotate around a second rotation axis, and the first rotation axis and the second rotation axis coincide or do not coincide. When the first take-up reel and the second take-up reel rotate, the tape body is driven to be transported from the first take-up reel to the second take-up reel. A tape header and roller structures are disposed on a transport path of the tape body between the first take-up reel and the second take-up reel. The tape header is configured to perform a read operation or a write operation on the tape body, and the roller structure is configured to support the tape body. The roller structure is further configured to gradually change a height of the tape body, so that the height of the tape body adapts to the first take-up reel and the second take-up reel.

In comparison with a solution in which a first take-up reel and a second take-up reel in a tape drive are in a flat layout, the first take-up reel and the second take-up reel rotate around two rotation axes respectively, a tape header moves relative to a width direction of a tape body, and the tape drive includes a vacant area that cannot be covered by the tape body, resulting in low space utilization of the tape drive, in the solution provided in this application, the first take-up reel and the second take-up reel are in the stacking layout, the first take-up reel and the second take-up reel rotate around the respective rotation axes, that is, the take-up reels winding the tape body are in the stacking layout, or the take-up reels winding the tape body are stacked in a direction of the rotation axis, and the take-up reels are disposed in a vacant area in the tape drive, so that a volume of the tape drive is reduced, and space utilization of the tape drive is improved. In addition, because the volume of the tape drive is reduced, a storage capacity per unit volume is increased, and capacity density of the tape drive is increased. In other words, in comparison with a tape drive of a same space size, the tape drive provided in this application effectively improves the capacity density of the tape drive, that is, improves the storage capacity of the tape drive.

In a possible implementation, the first rotation axis and the second rotation axis coincide, the first take-up reel and the second take-up reel are arranged along the first rotation axis, and the first take-up reel and the second take-up reel can rotate around the first rotation axis. It may be understood that the first take-up reel and the second take-up reel rotate around a same rotation axis, and the first take-up reel and the second take-up reel are completely stacked together. In comparison with that the first take-up reel and the second take-up reel that are in the flat layout in the tape drive need to occupy space of two take-up reels in the tape drive, in the solution provided in this application, the first take-up reel and the second take-up reel that rotate around the same rotation axis need to occupy space of only one take-up reel in the tape drive, thereby effectively reducing a volume of the tape drive and improving space utilization of the tape drive.

In another possible implementation, the first rotation axis and the second rotation axis do not coincide, the first take-up reel can rotate around the first rotation axis, and the second take-up reel can rotate around the second rotation axis. It may be understood that although the first take-up reel and the second take-up reel rotate around the two rotation axes, the first take-up reel and the second take-up reel are partially stacked together. In comparison with that the first take-up reel and the second take-up reel that are in the flat layout in the tape drive need to occupy the space of the two take-up reels in the tape drive, the solution provided in this application still reduces the space occupied by the first take-up reel and the second take-up reel in the tape drive, thereby effectively reducing the volume of the tape drive and improving the space utilization of the tape drive.

In a possible implementation, the roller structures include a first roller structure and a second roller structure. In a direction of the first rotation axis, the first roller structure is disposed on one side of the tape header, and the second roller structure is disposed on the other side of the tape header. The first roller structure is configured to support a part that is of the tape body and that is located between the tape header and the first take-up reel, and the second roller structure is configured to support a part that is of the tape body and that is located between the tape header and the second take-up reel.

Alternatively, the first roller structure is disposed on one side that is of the tape header and that is on the transport path of the tape body between the first take-up reel and the second take-up reel, and the second roller structure is disposed on the other side that is of the tape header and that is on the transport path of the tape body between the first take-up reel and the second take-up reel.

The tape body is supported by the roller structures, so that the tape header can perform a read operation or a write operation on the tape body. This avoids a case that the read operation or the write operation cannot be normally performed on the tape body due to loosening of the tape body.

In another possible implementation, the first roller structure includes at least one roller disposed in parallel to the first rotation axis, and at least one roller disposed obliquely relative to the first rotation axis.

Therefore, when the first take-up reel and the second take-up reel rotate, in a process of driving the tape body to be transported from the first take-up reel to the second take-up reel, the tape body can move in a direction of the first rotation axis, so that the tape header can normally perform the read operation or the write operation on the tape body.

In some embodiments, the roller disposed obliquely relative to the first rotation axis includes a first roller and a second roller. A rotation axis of the first roller is parallel to a rotation axis of the second roller. The tape body includes a first surface and a second surface that are opposite to each other. The first surface is closer to the first rotation axis than the second surface. The first roller supports the first surface, and the second roller supports the second surface. Alternatively, the first surface supported by the first roller is closer to the first rotation axis, and the second surface supported by the second roller is farther away from the first rotation axis.

In some other embodiments, the roller disposed in parallel to the first rotation axis includes a third roller and a fourth roller. The first roller and the second roller are located between the third roller and the fourth roller. The third roller supports the first surface, and the fourth roller supports the first surface.

In another possible implementation, the at least one roller disposed in parallel to the first rotation axis is disposed around the first rotation axis, and the at least one roller disposed obliquely relative to the first rotation axis is disposed around the first rotation axis. A height of the at least one roller disposed in parallel to the first rotation axis is sequentially increased or decreased.

For example, the first roller, the second roller, the third roller, and the fourth roller are disposed around the first rotation axis. The first roller, the second roller, the third roller, and the fourth roller are arranged in the direction of the first rotation axis. It may be understood that, if the first take-up reel is located above the second take-up reel, or the first take-up reel is stacked above the second take-up reel, a height of the third roller is higher than a height of the fourth roller; or if the first take-up reel is located below the second take-up reel, or the second take-up reel is stacked above the first take-up reel, a height of the third roller is lower than a height of the fourth roller. A height of the first roller and a height of the second roller are between the height of the third roller and the height of the fourth roller.

In this way, the tape body is wound onto two parallel rollers that have an inclination angle with the first rotation axis, so that when the first take-up reel and the second take-up reel rotate, in the process of driving the tape body to be transported from the first take-up reel to the second take-up reel, the tape body can move in the direction of the first rotation axis, and the tape body is transported from the first take-up reel to the second take-up reel.

In another possible implementation, the tape body includes a first surface and a second surface that are opposite to each other. The first surface is closer to the first rotation axis than the second surface. The second surface is provided with magnetic particles; a first roller structure and a second roller structure each include a plurality of rollers; and a quantity of rollers supporting the first surface is greater than a quantity of rollers supporting the second surface. For the tape body supported by the roller structures, the first surface of the tape body is closer to the first take-up reel and the second take-up reel than the second surface. Alternatively, a quantity of rollers supporting a surface on which no magnetic particle is disposed is greater than a quantity of rollers supporting a surface on which magnetic particles are disposed, that is, the quantity of rollers supporting the surface on which the magnetic particles are disposed is less than the quantity of rollers supporting the surface on which no magnetic particle is disposed.

In this way, an orientation of a magnetic particle coating surface is changed to reduce a quantity of rollers in contact with the surface coated with the magnetic particles, thereby reducing abrasion of the tape body.

In another possible implementation, the tape drive further includes a tape header driver, where the tape header driver is connected to the tape header, the tape header driver is configured to drive the tape header to move in a first direction, and the first direction is parallel to a width direction of the tape body. The tape header is disposed on the second surface; and the tape header driver is disposed on the first surface.

Alternatively, the tape body is disposed between the tape header driver and the tape header, and the tape header driver is disposed on the first surface.

Because the tape header driver and the tape header are separately disposed on two surfaces of the tape body, a layout limitation that both the tape header driver and the tape header are disposed on a magnetic particle coating surface is overcome, the volume of the tape drive is reduced, and the space utilization of the tape drive is improved.

In another possible implementation, the tape drive further includes a housing. The first take-up reel, the second take-up reel, the tape body, the tape header, and the roller structures are disposed in the housing, and the roller structures include the first roller structure and the second roller structure. A plurality of corners are formed in the housing; the first roller structure is located at a location that is in the housing and that is close to a first corner; and the second roller structure is located at a location that is in the housing and that is close to a second corner.

In this way, the take-up reels, the tape body, the tape header, and the roller structures are disposed by fully utilizing space in the housing of the tape drive, to further reduce the volume of the tape drive, miniaturize the tape drive, and improve capacity density in the tape drive.

In another possible implementation, the tape drive further includes a first motor and a second motor. The first motor is configured to drive the first take-up reel to rotate, and the second motor is configured to drive the second take-up reel to rotate.

In another possible implementation, the first take-up reel is of a hollow structure, and the first motor is located in the first take-up reel; and the second take-up reel is of a hollow structure, and the second motor is located in the second take-up reel.

Therefore, the motor is located in the reel, so that space that is of the tape drive and that is occupied by the motor is saved, a size of the tape drive is reduced, the tape drive is miniaturized, and the capacity density in the tape drive is improved.

According to a second aspect, a tape is provided, including: a first take-up reel, where the first take-up reel can rotate around a first rotation axis, and the first take-up reel is configured to wind a tape body; and the tape body, configured to record data, where the tape body includes a fastening end and a moving end, the fastening end is fastened to the first take-up reel, and the moving end is configured to: when the tape is placed in a tape driver, to be connected to a second take-up reel in the tape driver.

In a possible implementation, when the tape is disposed in the tape driver, the first take-up reel and the second take-up reel are in a stacking layout, and the tape driver includes the second take-up reel, a tape header, and roller structures. The first take-up reel and the second take-up reel are in a stacking layout, and the second take-up reel is configured to wind the tape body after the moving end is connected to the second take-up reel. When the first take-up reel and the second take-up reel rotate, the tape body can be transported from the first take-up reel to the second take-up reel. The tape header is disposed on a transport path of the tape body between the first take-up reel and the second take-up reel, and the tape header is configured to perform a read operation or a write operation on the tape body. The roller structures are disposed on the transport path of the tape body between the first take-up reel and the second take-up reel, and the roller structure is configured to support the tape body. The roller structure is further configured to gradually change a height of the tape body, so that the height of the tape body adapts to the first take-up reel and the second take-up reel.

According to a third aspect, a tape drive is provided. The tape drive includes a tape mount port, a second take-up reel, a tape header, and roller structures. The tape mount port is configured to: mount a tape into the tape drive or remove the tape from the tape drive. The tape includes a first take-up reel and a tape body, the first take-up reel can rotate around a first rotation axis, and the first take-up reel is configured to wind the tape body. The tape body is configured to record data. The tape body includes a fastening end and a moving end, the fastening end is fastened to the first take-up reel, and the moving end is configured to: when the tape is placed in the tape drive, to be connected to the second take-up reel. When the tape is disposed in the tape drive, the first take-up reel and the second take-up reel are in a stacking layout. The second take-up reel is configured to wind the tape body after the moving end is connected to the second take-up reel. When the first take-up reel and the second take-up reel rotate, the tape body can be transported from the first take-up reel to the second take-up reel. The tape header is disposed on a transport path of the tape body between the first take-up reel and the second take-up reel, and the tape header is configured to perform a read operation or a write operation on the tape body. The roller structures are disposed on the transport path of the tape body between the first take-up reel and the second take-up reel, and the roller structure is configured to support the tape body. The roller structure is further configured to gradually change a height of the tape body, so that the height of the tape body adapts to the first take-up reel and the second take-up reel.

According to a fourth aspect, a storage system is provided. The storage system includes a processor and the tape drive according to any one of the first aspect or the possible implementations of the first aspect, or the tape drive according to any one of the third aspect or the possible implementations of the third aspect. The processor is configured to generate data, and the tape drive is configured to store data processed by the processor.

For technical effect brought by any design manner in the second aspect to the fourth aspect, refer to technical effect brought by the first aspect or different possible implementations of the first aspect. Details are not described herein again.

In this application, on the basis of the implementations according to the foregoing aspects, the implementations may be further combined to provide more implementations.

### BRIEF DESCRIPTION OF DRAWINGS

FIG. 1 is a diagram of a tape drive according to a conventional technology;
FIG. 2 is a diagram of take-up reels in a stacking layout according to this application;
FIG. 3 is a diagram of a rotation direction of a take-up reel according to this application;
FIG. 4(a) to FIG. 4(c) are a diagram of a structure of a tape drive according to this application;
FIG. 5 is a diagram of a location of a magnetic particle coating surface according to this application;
FIG. 6 is a diagram of a location of a motor according to this application;
FIG. 7 is a diagram of a structure of another tape drive according to this application;
FIG. 8 is a diagram of take-up reels in another stacking layout according to this application; and
FIG. 9 is a diagram of a structure of a computer device according to this application.

### DESCRIPTION OF EMBODIMENTS

For ease of understanding, main terms in this application are first explained.

**Tape storage (tape storage)** is a persistent storage mode in which a tape is used as a data storage device.

**A tape (tape)** is a non-volatile storage medium, configured to record sound, images, digits, texts, or other signals, and is a strip of material coated with a magnetic layer. Generally, the tape is encapsulated in a roll-up state. Based on a sequential access characteristic of the tape, the tape is used in scenarios such as conventional storage and backup, and sequential reading and writing of a large amount of data. The tape may also be referred to as a tape body. Optionally, the tape may alternatively be an apparatus including a tape body and a take-up reel winding the tape body. The following uses the tape body as an example for description.

**A tape header (tape header)** is a component that reads and writes magnetic media on a tape body according to a magnetic principle. The tape header includes a write tape header and a read tape header. The write tape header records data by changing a magnetic field of the magnetic medium through magnetization. The read tape header reads data on the magnetic medium by sensing the magnetic field of the magnetic medium.

**A magnetic particle (magnetic particle)** is a hard magnetic single-domain particle. Magnetic particles, adhesive, solvent, and the like are made into magnetic slurry, and coated on a surface of a plastic or a metal sheet base (a support body), so that a magnetic recording material like a tape, a magnetic disk, and a magnetic card can be made. The magnetic particle is a core component of magnetic coating, and is a main factor that determines a magnetic characteristic of a magnetic recording medium. The magnetic particle affects a property of the magnetic recording material. Commonly used magnetic particles are oxide magnetic particles and metal magnetic particles.

**A tape drive (tape drive)** is an economical, reliable, large-capacity, and fast storage device. The tape drive is a single-driver product. The tape drive includes a tape driver, a tape header, and a tape body. The tape driver is configured to drive the tape body to move, so that the tape header can read and write a magnetic medium on the tape body.

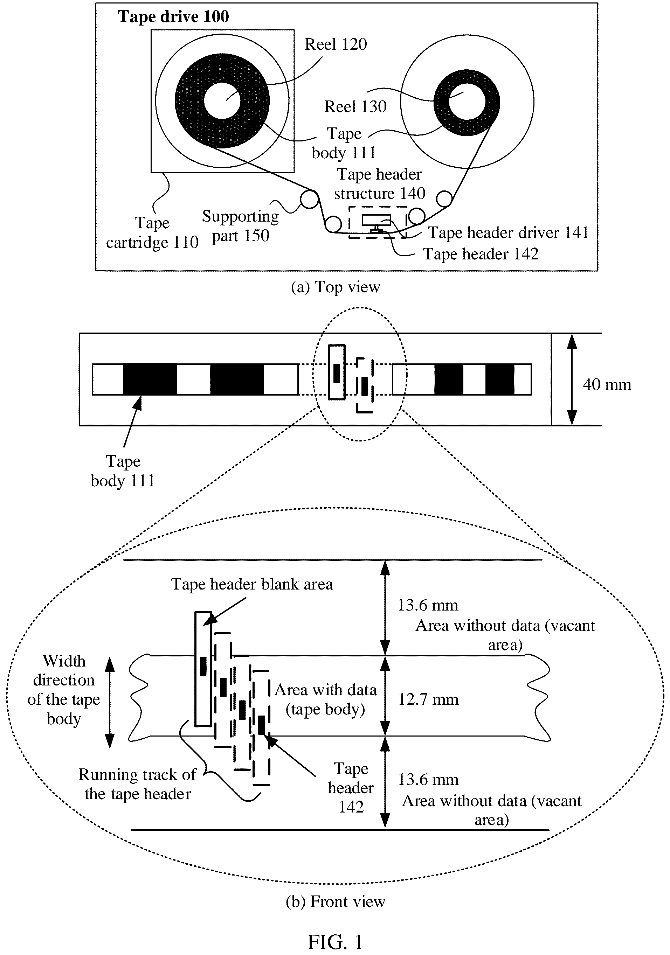

For example, FIG. 1 is a diagram of a tape drive according to a conventional technology. (a) in FIG. 1 shows a top view of the tape drive according to the conventional technology. A tape drive 100 includes a tape cartridge 110, a reel 120, a reel 130, a tape header structure 140, and a supporting part 150. The tape header structure 140 includes a tape header driver 141 and a tape header 142. The tape cartridge 110 is a single-reel tape cartridge. When the tape cartridge 110 is loaded into the tape drive 100, the reel 120 and the reel 130 rotate to drive a tape body 111 in the tape cartridge 110 to be wound onto the reel 130. During movement of the tape body 111, the tape header driver 141 drives the tape header 142 to perform a read operation or a write operation on the tape body 111. (b) in FIG. 1 shows a front view of the tape drive according to the conventional technology. The tape header 142 moves in a width direction of the tape body 111, and performs the read operation or the write operation on the tape body 111.

Therefore, the tape body moves around two reels, and the tape header moves relative to the width direction of the tape body. As a result, a moving range of the tape header is far greater than a width of the tape body, and the tape drive includes a vacant area that is not covered by the tape body. This reduces space utilization of the tape drive.

For example, as shown in (b) in FIG. 1, a thickness of the tape drive is about 40 millimeters (millimeter, mm), a width of the tape body is 12.7 mm, and the vacant area that is not covered by the tape body in the tape drive is about 27.3 mm. Therefore, space utilization of the tape drive in a thickness direction of the tape drive is about 32%. For a tape drive that includes two tapes, the space utilization of the tape drive is less than 16%. A moving manner of the tape header is a decisive factor that restricts the thickness of the tape drive, and the thickness of the tape drive cannot be compressed. As a result, the space utilization of the tape drive is low, and the space utilization cannot be improved to increase a storage capacity per unit area.

**A stacking layout (stacking layout)** is a layout manner in which tapes are stacked in a width direction of the tapes.

To resolve a problem that the space utilization of the tape drive is low and the capacity density of the tape drive is low, this application provides a tape drive, namely, a tape drive with a dual-tape stacking layout, to double space utilization of the tape drive, and provide architecture innovation for multiples of improvement of capacity density in an integrated tape drive. The tape drive includes a first take-up reel and a second take-up reel that rotate around respective rotation axes. The first take-up reel and the second take-up reel are in a stacking layout, and the first take-up reel and the second take-up reel wind a tape body. The first reel can rotate around a first rotation axis, the second reel can rotate around a second rotation axis, and the first rotation axis and the second rotation axis coincide or do not coincide. When the first take-up reel and the second take-up reel rotate, the tape body is driven to be transported from the first take-up reel to the second take-up reel. A tape header and roller structures are disposed on a transport path of the tape body between the first take-up reel and the second take-up reel. The tape header is configured to perform a read operation or a write operation on the tape body, and the roller structure is configured to support the tape body. The roller structure is further configured to gradually change a height of the tape body, so that the height of the tape body adapts to the first take-up reel and the second take-up reel.

In comparison with a solution in which a first take-up reel and a second take-up reel in a tape drive are in a flat layout, the first take-up reel and the second take-up reel rotate around two rotation axes respectively, a tape header moves relative to a width direction of a tape body, and the tape drive includes a vacant area that cannot be covered by the tape body, resulting in low space utilization of the tape drive, in the solution provided in this application, the first take-up reel and the second take-up reel are in the stacking layout, the first take-up reel and the second take-up reel rotate around the respective rotation axes, that is, the take-up reels winding the tape body are in the stacking layout, or the take-up reels winding the tape body are stacked in a direction of the rotation axis, and the take-up reels are disposed in a vacant area in the tape drive, so that a volume of the tape drive is reduced, and space utilization of the tape drive is improved. In comparison with a tape drive of a same space size, the tape drive provided in this application effectively improves capacity density of the tape drive, that is, improves a storage capacity of the tape drive.

The tape drive provided in this application may be used in a computer device of any form, including but not limited to a personal computer (Personal Computer, PC), a cabinet server, a rack server, a tower server, a blade server, and a server that provides high-performance computing and a server that provides reliable storage in a cluster network (for example, a high-performance computing (High-performance computing, HPC) network or a high-availability (High-Availability, HA) network).

The following describes in detail an implementation of the tape drive provided in this application with reference to the accompanying drawings.

This application provides a tape drive, where the tape drive includes a first take-up reel, a second take-up reel, a tape body, a tape header, and roller structures.

The first take-up reel and the second take-up reel are arranged along a first rotation axis, and the first take-up reel and the second take-up reel can rotate around the first rotation axis. It may be understood that both the first take-up reel and the second take-up reel are perpendicular to a same rotation axis. Alternatively, both a diameter of the first take-up reel and a diameter of the second take-up reel are perpendicular to a same rotation axis. The first take-up reel and the second take-up reel are stacked in a direction of the first rotation axis, that is, the first take-up reel and the second take-up reel are stacked together in the direction of the first rotation axis, thereby implementing a stacking layout of the first take-up reel and the second take-up reel. For example, the first take-up reel is located above the second take-up reel. For another example, the second take-up reel is located above the first take-up reel. A size of the first take-up reel may be the same as or different from a size of the second take-up reel. It may be understood that when the size of the first take-up reel is the same as the size of the second take-up reel, the diameter of the first take-up reel is the same as the diameter of the second take-up reel; or when the size of the first take-up reel is different from the size of the second take-up reel, the diameter of the first take-up reel is different from the diameter of the second take-up reel.

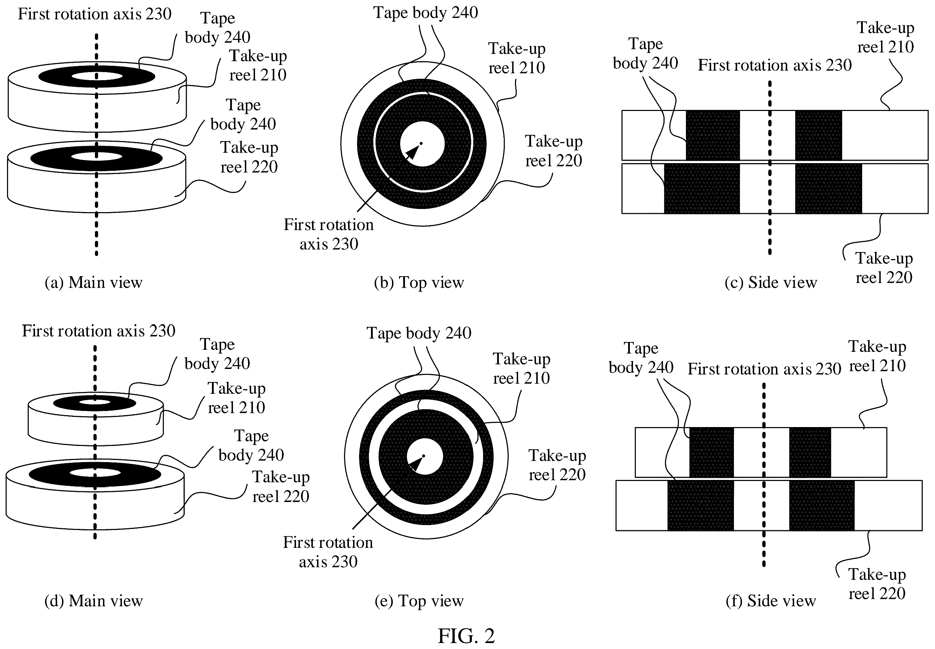

For example, FIG. 2 is a diagram of take-up reels in a stacking layout according to this application. In (a) to (c) in FIG. 2, a size of a take-up reel 210 is equal to a size of a take-up reel 220. (a) in FIG. 2 shows a main view of the take-up reels in the stacking layout. The take-up reel 210 and the take-up reel 220 are arranged along a first rotation axis 230, the take-up reel 210 and the take-up reel 220 can rotate around the first rotation axis, and the take-up reel 210 is located above the take-up reel 220. The take-up reel 210 and the take-up reel 220 wind a tape body 240. (b) in FIG. 2 shows a top view of the take-up reels in the stacking layout. (c) in FIG. 2 shows a side view of the take-up reels in the stacking layout. For ease of understanding, in (d) to (f) in FIG. 2, the size of the take-up reel 210 is less than the size of the take-up reel 220. (d) in FIG. 2 shows a main view of the take-up reels in the stacking layout. A tape body 240 wound onto the take-up reel 210 is less than a tape body 240 wound onto the take-up reel 220. (e) in FIG. 2 shows a top view of the take-up reels in the stacking layout. A ring of the tape body 240 wound onto the take-up reel 210 is smaller than a ring of the tape body 240 wound onto the take-up reel 220. (f) in FIG. 2 shows a side view of the take-up reels in the stacking layout.

In comparison with a flat layout of a first take-up reel and a second take-up reel, that is, the first take-up reel and the second take-up reel rotate around two rotation axes respectively, when the first take-up reel and the second take-up reel in the flat layout in a tape drive need to occupy space of the two take-up reels in the tape drive, the first take-up reel and the second take-up reel are in a stacking layout, and the first take-up reel and the second take-up reel need to occupy only an area of one take-up reel in the tape drive. It can be learned that the stacking layout of the first take-up reel and the second take-up reel utilizes height space in the tape drive, and reduces an area occupied by a plane that is in the tape drive and that is perpendicular to the height space. This improves space utilization of the tape drive, reduces a size of the tape drive, and implements a miniaturized tape drive.

In addition, the first take-up reel and the second take-up reel are configured to wind the tape body. When the first take-up reel and the second take-up reel rotate, the tape body can be transported from the first take-up reel to the second take-up reel, that is, the tape body in the first take-up reel is wound onto the second take-up reel.

For example, if the first take-up reel is stacked above the second take-up reel, the first take-up reel may be referred to as an upper reel, and the second take-up reel may be referred to as a lower reel. That the tape body is transported from the first take-up reel to the second take-up reel may mean that the tape body is transported from the upper reel to the lower reel.

For another example, if the second take-up reel is stacked above the first take-up reel, the first take-up reel may be referred to as a lower reel, and the second take-up reel may be referred to as an upper reel. That the tape body is transported from the first take-up reel to the second take-up reel may mean that the tape body is transported from the lower reel to the upper reel.

In some embodiments, the tape body may be transported from the upper reel to the lower reel, or may be transported from the lower reel to the upper reel. A running direction of the tape body between the upper reel and the lower reel is not limited in this application.

The following uses an example in which the size of the first take-up reel is equal to the size of the second take-up reel for description.

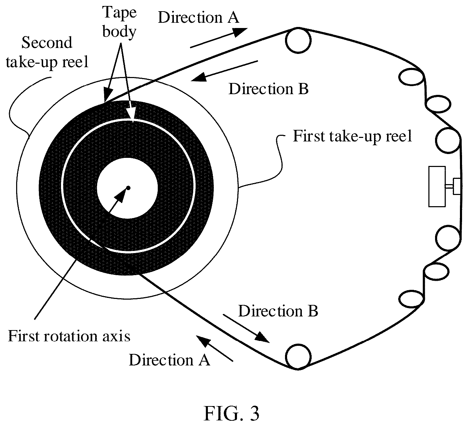

For example, as shown in FIG. 3, the first take-up reel is stacked above the second take-up reel. When the first take-up reel and the second take-up reel rotate in a direction A, the tape body is transported from the first take-up reel to the second take-up reel, that is, the tape body in the first take-up reel is wound onto the second take-up reel. When the first take-up reel and the second take-up reel rotate in a direction B, the tape body is transported from the second take-up reel to the first take-up reel, that is, the tape body in the second take-up reel is wound onto the first take-up reel. The direction A and the direction B are opposite directions.

In this way, when the tape body is transported from the first take-up reel to the second take-up reel, the tape body can be wound onto the second take-up reel in time, and when the tape body is transported from the second take-up reel to the first take-up reel, the tape body can be wound onto the first take-up reel in time. This avoids a case that the read operation or the write operation cannot be normally performed on the tape body due to loosening of the tape body.

Optionally, in an initial state of the tape body, the tape body is wound onto the first take-up reel, and there is no tape body that can be rolled out from the second take-up reel. When the first take-up reel and the second take-up reel rotate, the tape body is transported from the first take-up reel to the second take-up reel. For example, it is assumed that no data is recorded on the tape body. When the first take-up reel and the second take-up reel rotate, the tape body is transported from the first take-up reel to the second take-up reel, and the write operation may be performed on the tape body. It is assumed that data is recorded on the tape body. When the first take-up reel and the second take-up reel rotate, the tape body is transported from the first take-up reel to the second take-up reel, and the read operation may be performed on the tape body.

Optionally, in the initial state of the tape body, the tape body is wound onto the second take-up reel, and there is no tape body that can be rolled out from the first take-up reel. When the first take-up reel and the second take-up reel rotate, the tape body is transported from the second take-up reel to the first take-up reel.

Optionally, in the initial state of the tape body, both the first take-up reel and the second take-up reel wind the tape body. When the first take-up reel and the second take-up reel rotate, the tape body is transported from the first take-up reel to the second take-up reel, or the tape body is transported from the second take-up reel to the first take-up reel.

In addition, a tape header and roller structures are disposed on a transport path of the tape body between the first take-up reel and the second take-up reel. The tape header is configured to perform the read operation or the write operation on the tape body. The roller structure is configured to support the tape body.

In some embodiments, the tape header moves in a first direction to perform the read operation or the write operation on the tape body. The first direction is parallel to a width direction of the tape body. For example, (b) in FIG. 1 shows a running track of the tape header. For a specific manner in which the tape header performs the read operation or the write operation on the tape body, refer to that in the conventional technology. Details are not described again.

In some other embodiments, the roller structure is further configured to gradually change a height of the tape body, so that the height of the tape body adapts to the first take-up reel and the second take-up reel. It may be understood that, in a process in which the tape body is transported from the first take-up reel to the second take-up reel, the roller structures can support the tape body to be transported from a location of the first take-up reel to a central location, so that the tape header performs the read operation or the write operation on the tape body. Further, the tape body is transported from the central location to a location of the second take-up reel and is wound onto the second take-up reel.

Alternatively, in a process in which the tape body is transported from the second take-up reel to the first take-up reel, the roller structures can support the tape body to be transported from the location of the second take-up reel to the central location, so that the tape header performs the read operation or the write operation on the tape body. Further, the tape body is transported from the central location to the location of the first take-up reel and is wound onto the first take-up reel.

The central location may be a location at which the tape body is located when the tape header can perform the read operation or the write operation on the tape body. For example, the central location may be a location parallel to a center of a thickness of the tape drive, or the central location may be a location at which a distance to a surface of the first take-up reel is equal to a distance to a surface of the second take-up reel. Surfaces of the first take-up reel and the second take-up reel include surfaces that are of the first take-up reel and the second take-up reel and that are stacked closely.

In this way, when the first take-up reel and the second take-up reel rotate, in a process of driving the tape body to be transported from the first take-up reel to the second take-up reel, or in a process of driving the tape body to be transported from the second take-up reel to the first take-up reel, the roller structures support the tape body, so that the tape header can perform the read operation or the write operation on the tape body. This avoids a case that the read operation or the write operation cannot be normally performed on the tape body due to loosening of the tape body.

In some embodiments, the roller structures include a first roller structure and a second roller structure. In a direction of the first rotation axis, the first roller structure is disposed on one side of the tape header, and the second roller structure is disposed on the other side of the tape header. Alternatively, the first roller structure is disposed on one side that is of the tape header and that is on the transport path of the tape body between the first take-up reel and the second take-up reel, and the second roller structure is disposed on the other side that is of the tape header and that is on the transport path of the tape body between the first take-up reel and the second take-up reel.

The first roller structure is configured to support a part that is of the tape body and that is located between the tape header and the first take-up reel. The second roller structure is configured to support a part that is of the tape body and that is located between the tape header and the second take-up reel. For example, the tape body located on the transport path between the first take-up reel and the second take-up reel is divided into a first part and a second part by the tape header, the first roller structure is configured to support the first part, and the second roller structure is configured to support the second part.

As the tape body is transported from the first take-up reel to the second take-up reel, or the tape body is transported from the second take-up reel to the first take-up reel, a location relationship between the first roller structure and the tape body supported by the first roller structure remains unchanged, and a location relationship between the second roller structure and the tape body supported by the second roller structure remains unchanged.

The first roller structure includes at least one roller disposed in parallel to the first rotation axis, and at least one roller disposed obliquely relative to the first rotation axis. It may be understood that a rotation axis of the at least one roller included in the first roller structure is parallel to the first rotation axis. There is an included angle between the rotation axis of the at least one roller further included in the first roller structure and the first rotation axis.

For example, the roller disposed obliquely relative to the first rotation axis includes a first roller and a second roller. Both a rotation axis of the first roller and a rotation axis of the second roller are disposed obliquely relative to the first rotation axis. There are a plurality of location relationships between the first roller and the second roller. For example, in some examples, the rotation axis of the first roller is parallel to the rotation axis of the second roller, or the rotation axis of the first roller is not parallel to the rotation axis of the second roller.

The rotation axis of the first roller is parallel to the rotation axis of the second roller. It may be understood that there is a first included angle between the rotation axis of the first roller and the first rotation axis, there is a second included angle between the rotation axis of the second roller and the first rotation axis, and a size of the first included angle is the same as a size of the second included angle.

The rotation axis of the first roller is not parallel to the rotation axis of the second roller. It may be understood that the size of the first included angle is different from the size of the second included angle.

For another example, the first roller is closer to the first rotation axis than the second roller, or the second roller is closer to the first rotation axis than the first roller.

In this way, the roller having an inclined angle with the first rotation axis is designed, so that the tape body can be transported from the location of the first take-up reel to the central location, and then transported from the central location to the location of the second take-up reel to be wound onto the second take-up reel; or the tape body can be transported from the location of the second take-up reel to the central location, and then transported from the central location to the location of the first take-up reel to be wound onto the first take-up reel. This ensures that the tape body is not deformed and the tape header can perform the read operation or the write operation on the tape body, and avoids that the tape header cannot perform the read operation or the write operation on the tape body due to deformation of the tape body.

For another example, the roller disposed in parallel to the first rotation axis includes a third roller and a fourth roller. Both a rotation axis of the third roller and a rotation axis of the fourth roller are parallel to the first rotation axis. The rotation axis of the third roller is parallel to the rotation axis of the fourth roller.

Optionally, the third roller is closer to the first rotation axis than the fourth roller, or the fourth roller is closer to the first rotation axis than the third roller.

There are a plurality of location relationships between the first roller, the second roller, the third roller, and the fourth roller, which are not limited. For example, in some examples, the first roller and the second roller are located between the third roller and the fourth roller.

In this way, the roller parallel to the first rotation axis is designed to support the tape body, thereby further improving stability of the tape body in the process of transporting the tape body from the first take-up reel to the second take-up reel, or driving the tape body to be transported from the second take-up reel to the first take-up reel. In this way, relative locations of the tape body and the tape header are fixed, and it is ensured that the tape body is not deformed.

In addition, the tape body includes a first surface and a second surface that are opposite to each other, and the first surface is closer to the first rotation axis than the second surface. Location relationships between the plurality of rollers included in the first roller structure and the first surface and the second surface included in the tape body are not limited. The plurality of rollers included in the first roller structure may support a same surface, or the plurality of rollers included in the first roller structure may support different surfaces. For example, the first roller supports the first surface, the second roller supports the second surface, the third roller supports the first surface, and the fourth roller supports the first surface.

In this way, different winding methods of the tape body on the plurality of rollers are implemented based on different manners of supporting the tape body by the plurality of rollers, to ensure that the tape body does not deform in the process in which the tape body is transported from the first take-up reel to the second take-up reel, or in the process in which the tape body is transported from the second take-up reel to the first take-up reel.

It should be noted that the first roller, the second roller, the third roller, and the fourth roller are disposed around the first rotation axis. The first roller, the second roller, the third roller, and the fourth roller are arranged in the direction of the first rotation axis. It may be understood that the first roller, the second roller, the third roller, and the fourth roller with different lengths are disposed along the direction of the first rotation axis. If the first take-up reel is located below the second take-up reel, the third roller is close to the first take-up reel, and the fourth roller is close to the tape header, a length of the third roller is less than a length of the fourth roller; or the fourth roller is close to the first take-up reel, and the third roller is close to the tape header, a length of the fourth roller is less than a length of the third roller. In this way, when the first take-up reel and the second take-up reel rotate, in the process of driving the tape body to be transported from the first take-up reel to the second take-up reel, the tape body is transported from the location of the first take-up reel to the central location, or when the first take-up reel and the second take-up reel rotate, the tape body is driven to be transported from the second take-up reel to the first take-up reel, and the tape body is transported from the central location to the first take-up reel and is wound onto the first take-up reel.

It may be understood that the second roller structure also includes a plurality of rollers. For location relationships between the plurality of rollers in the second roller structure and the first rotation axis and location relationships between the plurality of rollers, refer to the foregoing description about the first roller structure. Details are not described again.

Optionally, a location of the first roller structure is symmetric to a location of the second roller structure. In other words, the plurality of rollers included in the first roller structure and the plurality of rollers included in the second roller structure may be symmetrically disposed.

A quantity of rollers included in the first roller structure, a quantity of rollers included in the second roller structure, the location relationships between the plurality of rollers and the first rotation axis, and the location relationships between the plurality of rollers are not limited in this application. The foregoing described implementations may be randomly combined to resolve the foregoing problem, to ensure that the tape body is not deformed and the tape header can perform the read operation or the write operation on the tape body, and avoid that the tape header cannot perform the read operation or the write operation on the tape body due to the deformation of the tape body.

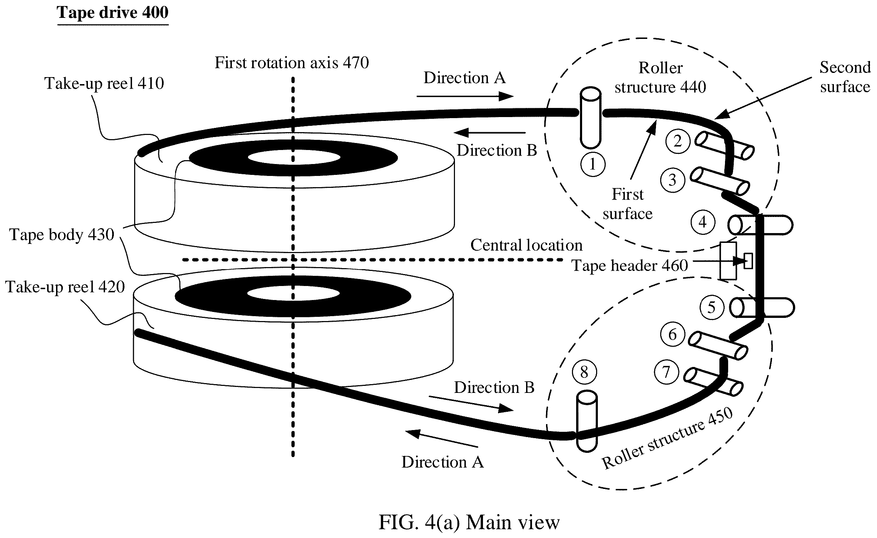

The following describes the tape drive as an example. FIG. 4(a) to FIG. 4(c) are a diagram of a structure of a tape drive according to this application. This section describes the structure of the tape drive from different perspectives. FIG. 4(a) shows a main view of the tape drive. A tape drive 400 includes a take-up reel 410, a take-up reel 420, a tape body 430, a roller structure 440, a roller structure 450, and a tape header 460.

The take-up reel 410 and the take-up reel 420 are arranged along a first rotation axis 470, and the take-up reel 410 and the take-up reel 420 can rotate around the first rotation axis 470. In other words, the take-up reel 410 and the take-up reel 420 are in a stacking layout. The take-up reel 410 and the take-up reel 420 are stacked together in a direction of the first rotation axis 470.

The tape body 430 is wound onto the take-up reel 410 and take-up reel 420.

When the take-up reel 410 and the take-up reel 420 rotate in a direction A, the tape body 430 can be transported from the take-up reel 410 to the take-up reel 420, that is, the tape body 430 on the take-up reel 410 is wound onto the take-up reel 420. When the take-up reel 410 and the take-up reel 420 rotate in a direction B, the tape body 430 can be transported from the take-up reel 420 to the take-up reel 410, that is, the tape body 430 on the take-up reel 420 is wound onto the take-up reel 410.

The tape header 460, the roller structure 440, and the roller structure 450 are disposed on the tape body 430 on a transport path of the take-up reel 410 and take-up reel 420.

The roller structure 440 and the roller structure 450 are configured to support the tape body 430.

The roller structure 440 includes a roller ① to a roller ④.

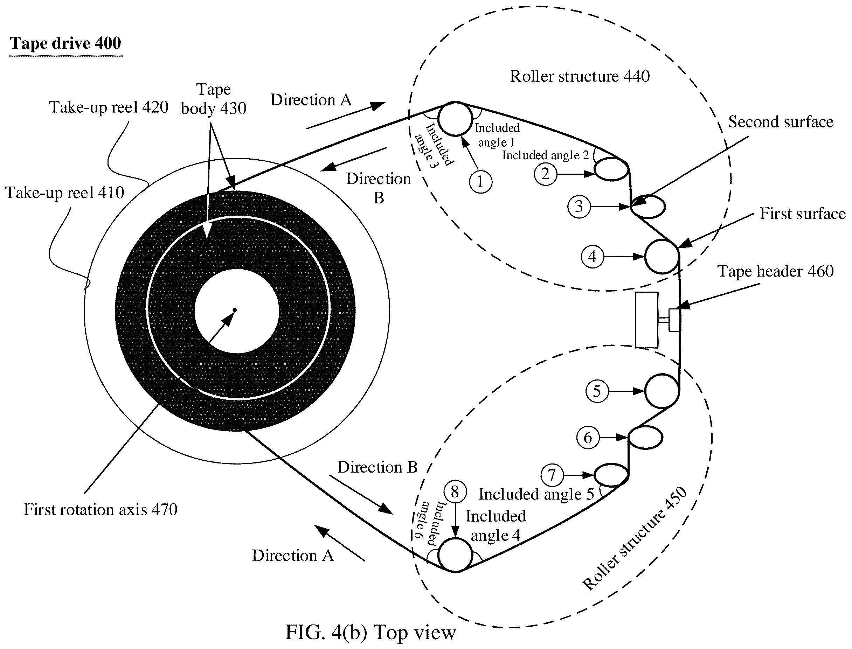

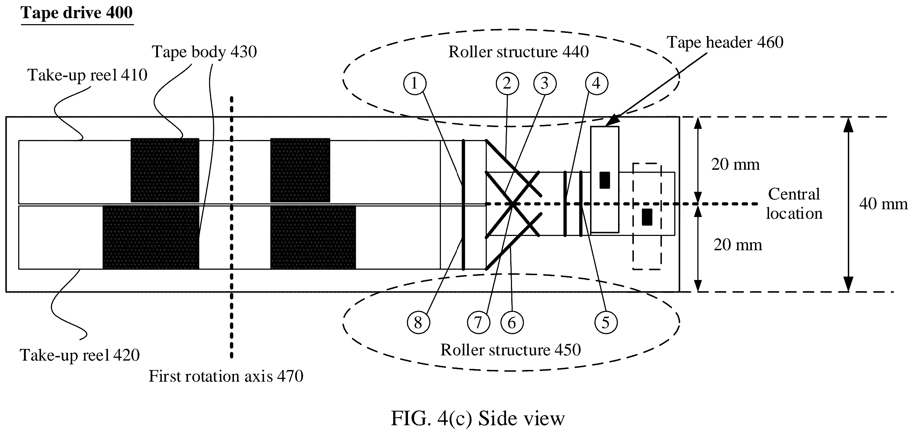

Both a rotation axis of the roller ① and a rotation axis of the roller ④ are parallel to the first rotation axis 470. The rotation axis of the roller ① is parallel to the rotation axis of the roller ④. The roller ① is closer to the first rotation axis than the roller ④. FIG. 4(b) shows a top view of the tape drive. FIG. 4(c) shows a side view of the tape drive. Both the rotation axis of the roller ① and the rotation axis of the roller ④ are parallel to the first rotation axis 470.

Both a rotation axis of the roller ② and a rotation axis of the roller ③ are disposed obliquely relative to the first rotation axis 470. The rotation axis of the roller ② and the rotation axis of the roller ③ each have a same included angle with the first rotation axis 470. The rotation axis of the roller ② is parallel to the rotation axis of the roller ③. The roller ② is closer to the first rotation axis 470 than the roller ③. As shown in FIG. 4(b) and FIG. 4(c), both the rotation axis of the roller ② and the rotation axis of the roller ③ intersect the first rotation axis 470.

The roller ② and the roller ③ are located between the roller ① and the roller ④.

The tape body 430 includes a first surface and a second surface that are opposite to each other, and the first surface is closer to the first rotation axis than the second surface. The roller ①, the roller ②, and the roller ④ support the first surface. The roller ③ supports the second surface.

The roller structure 450 includes a roller ⑤ to a roller ⑧.

Both a rotation axis of the roller ⑤ and a rotation axis of the roller ⑧ are parallel to the first rotation axis 470. The rotation axis of the roller ⑤ is parallel to the rotation axis of the roller ⑧. The roller ⑤ is closer to the first rotation axis 470 than the roller ⑧. As shown in FIG. 4(b) and FIG. 4(c), both the rotation axis of the roller ⑤ and the rotation axis of the roller ⑧ are parallel to the first rotation axis.

Both a rotation axis of the roller ⑥ and a rotation axis of the roller ⑦ are disposed obliquely relative to the first rotation axis 470. The rotation axis of the roller ⑥ and the rotation axis of the roller ⑦ each have a same included angle with the first rotation axis 470. The rotation axis of the roller ⑥ is parallel to the rotation axis of the roller ⑦. The roller ⑦ is closer to the first rotation axis 470 than the roller ⑥. As shown in FIG. 4(b) and FIG. 4(c), both the rotation axis of the roller ⑥ and the rotation axis of the roller ⑦ intersect the first rotation axis 470.

The roller ⑥ and the roller ⑦ are located between the roller ⑤ and the roller ⑧. The roller ⑤, the roller ⑦, and the roller ⑧ support the first surface. The roller ⑥ supports the second surface.

A height of the roller ① to a height of the roller ⑧ may be decreased in sequence. The height of the roller ① is higher than the height of the roller ④. The height of the roller ④ may be the same as the height of the roller ⑤. The height of the roller ⑤ is higher than the height of the roller ⑧.

The roller ① supports the first surface that is of the tape body 430 and that is close to the take-up reel 410, so that an included angle between the roller ① and the tape body 430 supported by the roller ① and the roller ② and an included angle between the roller ② and the tape body 430 supported by the roller ① and the roller ② do not change with a change of a radius of the tape body 430 on the take-up reel 410. FIG. 4(b) shows an included angle 1 and an included angle 3 between the tape body 430 and the roller ① and an included angle 2 between the tape body 430 and the roller ②. It may be understood that, as the radius of the tape body 430 on the take-up reel 410 is smaller, the included angle 3 between the tape body 430 and the roller ① is smaller; and as the radius of the tape body 430 on the take-up reel 410 is larger, the included angle 3 between the tape body 430 and the roller ① is larger. However, the included angle 1 between the tape body 430 and the roller ① and the included angle 2 between the tape body 430 and the roller ② do not change with the change of the radius of the tape body 430 on the take-up reel 410.

As shown in FIG. 4(c), the roller ② and the roller ③ may implement that when the tape body 430 is transported from the take-up reel 410 to the take-up reel 420, the tape body 430 is transported from the location of the take-up reel 410 to the central location; or when the tape body 430 is transported from the take-up reel 420 to the take-up reel 410, the tape body 430 is transported from the central location to the location of the take-up reel 410 and is wound onto the take-up reel 410. For example, distances between the central location and two surfaces of a housing are both 20 mm. During actual application, there may be another length.

The roller ④ and the roller ⑤ support the tape body 430, so that a location of the tape body 430 between the roller ③ and the roller ④ is fixed, the location of the tape body 430 between the roller ⑤ and the roller ⑥ is fixed, and relative locations of the tape body 430 and the tape header 460 are also fixed, to ensure that the tape header 460 stably performs the read operation or the write operation on the tape body 430.

Correspondingly, functions of the roller ⑧ and the roller ① are the same, functions of the roller ⑦ and the roller ② are the same, functions of the roller ⑥ and the roller ③ are the same, and functions of the roller ④ and the roller ⑤ are the same. In other words, the tape body 430 can be transported from the take-up reel 410 to the take-up reel 420, or the tape body 430 can be transported from the take-up reel 420 to the take-up reel 410.

The roller ⑧ supports the first surface that is of the tape body 430 and that is close to the take-up reel 420, so that an included angle between the roller ⑧ and the tape body 430 supported by the roller ⑧ and the roller ⑦ and an included angle between the roller ⑦ and the tape body 430 supported by the roller ⑧ and the roller ⑦ do not change with a change of a radius of the tape body 430 on the take-up reel 420. FIG. 4(b) shows an included angle 4 and an included angle 6 between the tape body 430 and the roller ⑧ and an included angle 5 between the tape body 430 and the roller ⑦. It may be understood that, as the radius of the tape body 430 on the take-up reel 410 is smaller, the included angle 6 between the tape body 430 and the roller ⑧ is smaller; and as the radius of the tape body 430 on the take-up reel 410 is larger, the included angle 6 between the tape body 430 and the roller ⑧ is larger. However, the included angle 4 between the tape body 430 and the roller ⑧ and the included angle 5 between the tape body 430 and the roller ⑦ do not change with the change of the radius of the tape body 430 on the take-up reel 410.

As shown in FIG. 4(b), the roller ⑦ and the roller ⑥ may implement that when the tape body 430 is transported from the take-up reel 410 to the take-up reel 420, the tape body 430 is transported from the central location to the location of the take-up reel 420 and is wound onto the take-up reel 420; or when the tape body 430 is transported from the take-up reel 420 to the take-up reel 410, the tape body 430 is transported from the location of the take-up reel 420 to the central location. The tape header 460 performs the read operation or the write operation on the tape body 430 in a width direction of the tape body 430.

In this way, the two take-up reels rotate around a same rotation axis, to implement the stacking layout of the take-up reels (as shown in FIG. 4(a) to FIG. 4(c)) winding the tape body, that is, the take-up reels winding the tape body are stacked in the direction of the rotation axis. When the take-up reels are disposed in a vacant area in the tape drive, and the tape header is kept to move in the width direction of the tape body to perform the read operation or the write operation on the tape body, space utilization of the tape drive is effectively improved. In comparison with a tape drive of a same space size, the tape drive provided in this application effectively improves capacity density of the tape drive, that is, improves a storage capacity of the tape drive.

In some other embodiments, the tape body includes a first surface and a second surface that are opposite to each other, and the first surface is closer to the first rotation axis than the second surface. The second surface is provided with magnetic particles. The first roller structure and the second roller structure each include a plurality of rollers. A quantity of rollers supporting the first surface is greater than a quantity of rollers supporting the second surface. In this way, an orientation of a magnetic particle coating surface is changed to reduce a quantity of rollers in contact with the surface coated with the magnetic particles, thereby reducing abrasion of the tape body.

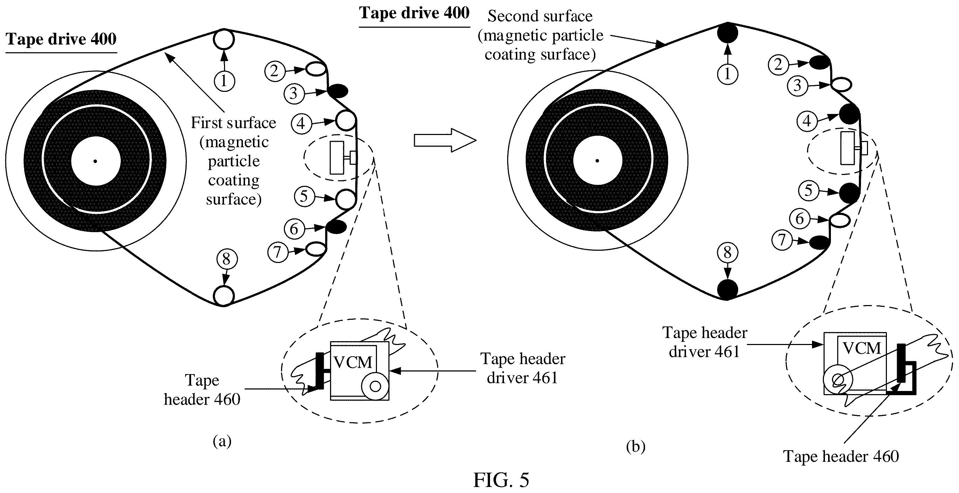

For example, FIG. 5 is a diagram of a location of a magnetic particle coating surface according to this application. As shown in (a) in FIG. 5, if the first surface is provided with magnetic particles, a roller ①, a roller ②, a roller ④, a roller ⑤, a roller ⑦, and a roller ⑧ are all in contact with the first surface, that is, the roller ①, the roller ②, the roller ④, the roller ⑤, the roller ⑦, and the roller ⑧ are all in contact with the magnetic particle coating surface. As shown in (b) in FIG. 5, if the second surface is provided with magnetic particles, only a roller ③ and a roller ⑥ are in contact with the second surface, that is, the roller ③ and the roller ⑥ are in contact with the magnetic particle coating surface, and the roller ①, the roller ②, the roller ④, the roller ⑤, the roller ⑦, and the roller ⑧ are all not in contact with the magnetic particle coating surface, thereby effectively reducing abrasion of the tape body.

Optionally, the tape drive further includes a tape header driver, where the tape header driver is connected to the tape header, the tape header driver is configured to drive the tape header to move in a first direction, and the first direction is parallel to a width direction of the tape body. The tape header driver is disposed on the first surface. The tape header is disposed on the second surface; or the tape body is disposed between the tape header driver and the tape header. Because the tape header driver and the tape header are separately disposed on two surfaces of the tape body, a layout limitation that both the tape header driver and the tape header are disposed on the magnetic particle coating surface is overcome, and flexibility of a tape header layout and the space utilization of the tape drive are improved.

For example, as shown in (b) in FIG. 5, the tape header driver 461 is connected to the tape header 460, the tape header driver 461 is disposed on the first surface, and the tape header 460 is disposed on the second surface.

In some other embodiments, the tape drive further includes a first motor and a second motor. The first motor is configured to drive the first take-up reel to rotate. The second motor is configured to drive the second take-up reel to rotate.

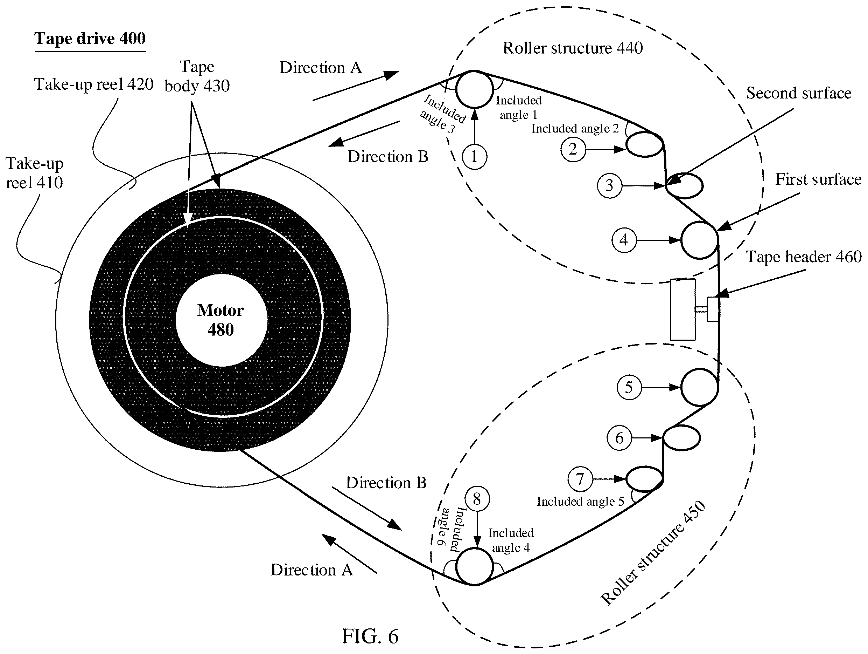

Optionally, the first take-up reel is of a hollow structure, and the first motor is located in the first take-up reel. The second take-up reel is of a hollow structure, and the second motor is located in the second take-up reel. For example, as shown in FIG. 6, the tape drive 400 further includes a motor 480, and the motor 480 is located in the first take-up reel. It may be understood that because the first take-up reel and the second take-up reel are stacked together, only one motor 480 is displayed herein. During actual application, motors are separately disposed in hollows of the two take-up reels.

Therefore, the motor is located in the hollow of the take-up reel, so that space that is of the tape drive and that is occupied by the motor is saved, a size of the tape drive is reduced, the tape drive is miniaturized, and the capacity density in the tape drive is improved.

In some other embodiments, the tape drive further includes a housing. The first take-up reel, the second take-up reel, the tape body, the tape header, and the roller structures are disposed in the housing, and the roller structures include the first roller structure and the second roller structure. A plurality of corners are formed in the housing; the first roller structure is located at a location that is in the housing and that is close to a first corner; and the second roller structure is located at a location that is in the housing and that is close to a second corner.

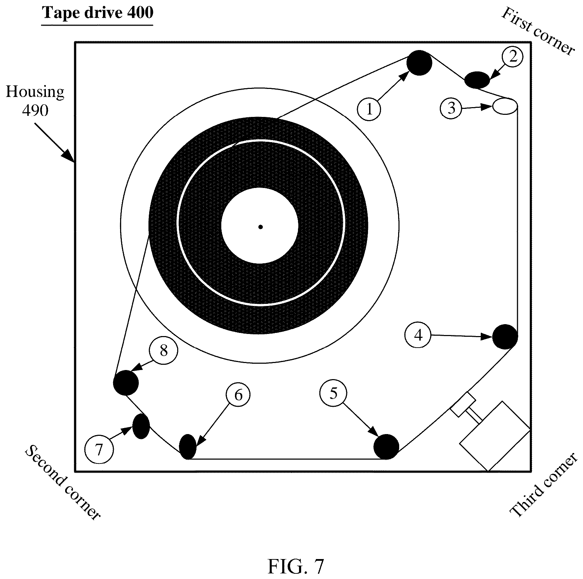

For example, as shown in FIG. 7, the tape drive 400 further includes a housing 490. The housing 490 is a square. A roller ①, a roller ②, and a roller ③ are located at the first corner of the housing 490, and a roller ⑥, a roller ⑦, and a roller @ are located at a second corner of the housing 490. A roller ④, a roller ⑤, and the tape header 460 are located at a third corner of the housing 490.

In this way, the tape header and the roller structures are disposed at the four corners to further reduce the size of the tape drive, miniaturize the tape drive, and improve the capacity density of the tape drive.

It should be noted that the foregoing embodiment is an example of the tape drive. The tape drive may further include other mechanical parts. For example, the tape drive may further include a controller, which controls rotation of the take-up reel and rotation of the roller in the roller structure.

In some other embodiments, the first take-up reel and the second take-up reel separately rotate around two rotation axes, that is, the first take-up reel and the second take-up reel are partially in a stacking layout, and the first take-up reel and the second take-up reel are partially stacked. The first take-up reel can rotate around a first rotation axis, and the second take-up reel can rotate around a second rotation axis. The first rotation axis and the second rotation axis do not coincide. A size of the first take-up reel may be the same as or different from a size of the second take-up reel.

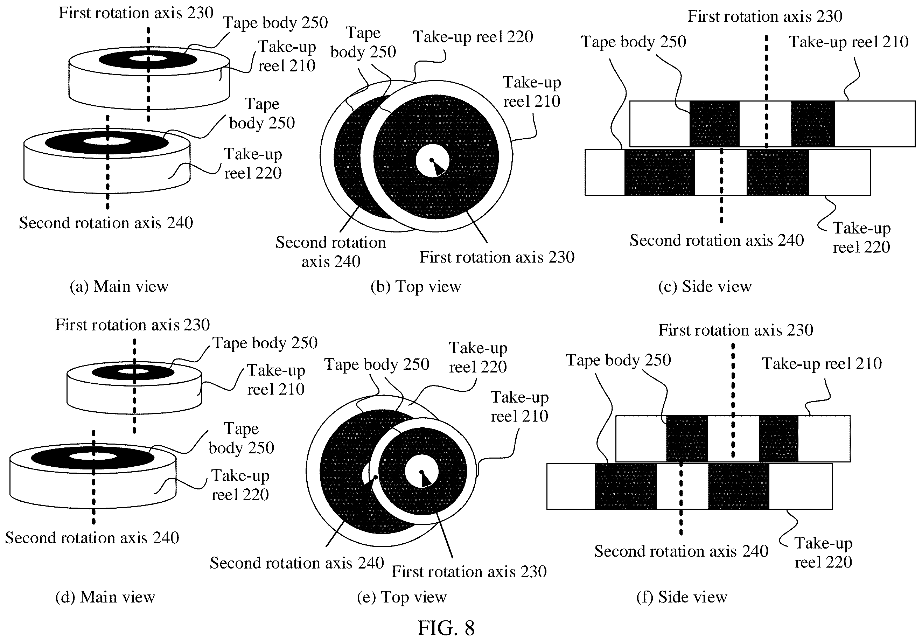

For example, FIG. 8 is a diagram of take-up reels in another stacking layout according to this application. In (a) to (c) in FIG. 8, a size of a take-up reel 210 is equal to a size of a take-up reel 220. (a) in FIG. 8 shows a main view of the take-up reels in the stacking layout. The take-up reel 210 is arranged along a first rotation axis 230, and the take-up reel 210 can rotate around the first rotation axis 230. The take-up reel 220 is arranged along a second rotation axis 240, and the take-up reel 220 can rotate around the first rotation axis 240. The take-up reel 210 is located above the take-up reel 220. The take-up reel 210 and the take-up reel 220 wind a tape body 250. (b) in FIG. 8 shows a top view of the take-up reels in the stacking layout. (c) in FIG. 8 shows a side view of the take-up reels in the stacking layout. For ease of understanding, in (d) to (f) in FIG. 8, the size of the take-up reel 210 is less than the size of the take-up reel 220. (d) in FIG. 8 shows a main view of the take-up reels in the stacking layout. The tape body 250 wound onto the take-up reel 210 is less than the tape body 250 wound onto the take-up reel 220. (e) in FIG. 8 shows a top view of the take-up reels in the stacking layout. A ring of the tape body 250 wound onto the take-up reel 210 is smaller than a ring of the tape body 250 wound onto the take-up reel 220. (f) in FIG. 8 shows a side view of the take-up reels in the stacking layout.

The layout manner of the two take-up reel described in FIG. 8 may also be applied to the tape drive 400 described in the foregoing embodiment. For other related explanations, refer to descriptions in the foregoing embodiments. Details are not described herein again.

In some other embodiments, the tape and the tape driver in the tape drive may be disposed separately. It may be understood that the tape may be mounted into or removed from the tape drive, to facilitate tape replacement and increase a storage capacity of the tape drive.

For example, a tape includes: a first take-up reel, where the first take-up reel can rotate around a first rotation axis, and the first take-up reel is configured to wind a tape body; and the tape body, configured to record data, where the tape body includes a fastening end and a moving end, the fastening end is fastened to the first take-up reel, and the moving end is configured to: when the tape is placed in a tape driver, to be connected to a second take-up reel in the tape driver.

In a possible implementation, when the tape is disposed in the tape driver, the first take-up reel and the second take-up reel are in a stacking layout, and the tape driver includes the second take-up reel, a tape header, and roller structures. The first take-up reel and the second take-up reel are in a stacking layout, and the second take-up reel is configured to wind the tape body after the moving end is connected to the second take-up reel. When the first take-up reel and the second take-up reel rotate, the tape body can be transported from the first take-up reel to the second take-up reel. The tape header is disposed on a transport path of the tape body between the first take-up reel and the second take-up reel, and the tape header is configured to perform a read operation or a write operation on the tape body. The roller structures are disposed on the transport path of the tape body between the first take-up reel and the second take-up reel, and the roller structure is configured to support the tape body. The roller structure is further configured to gradually change a height of the tape body, so that the height of the tape body adapts to the first take-up reel and the second take-up reel.

This application further provides a tape drive. The tape drive includes a tape mount port, a second take-up reel, a tape header, and roller structures. The tape mount port is configured to: mount a tape into the tape drive or remove the tape from the tape drive. The tape includes a first take-up reel and a tape body, the first take-up reel can rotate around a first rotation axis, and the first take-up reel is configured to wind the tape body. The tape body is configured to record data. The tape body includes a fastening end and a moving end, the fastening end is fastened to the first take-up reel, and the moving end is configured to: when the tape is placed in the tape drive, to be connected to the second take-up reel. When the tape is disposed in the tape drive, the first take-up reel and the second take-up reel are in a stacking layout. The second take-up reel is configured to wind the tape body after the moving end is connected to the second take-up reel. When the first take-up reel and the second take-up reel rotate, the tape body can be transported from the first take-up reel to the second take-up reel. The tape header is disposed on a transport path of the tape body between the first take-up reel and the second take-up reel, and the tape header is configured to perform a read operation or a write operation on the tape body. The roller structures are disposed on the transport path of the tape body between the first take-up reel and the second take-up reel, and the roller structure is configured to support the tape body. The roller structure is further configured to gradually change a height of the tape body, so that the height of the tape body adapts to the first take-up reel and the second take-up reel.

For detailed explanations of the tape and the tape drive, refer to the description in the foregoing embodiments. Details are not described again.

A tape mounting manner is not limited in this application. For example, a tape is manually mounted, that is, if a tape body is wound onto a first take-up reel, the tape body wound onto the first take-up reel is manually wound onto a second take-up reel, so that the tape body moves from the first take-up reel to the second take-up reel or the tape body wound onto the second take-up reel moves from the second take-up reel to the first take-up reel again. For another example, the tape is automatically mounted, that is, if the tape body is wound onto the first take-up reel, a controller controls a robot arm to wind the tape body wound onto the first take-up reel onto the second take-up reel.

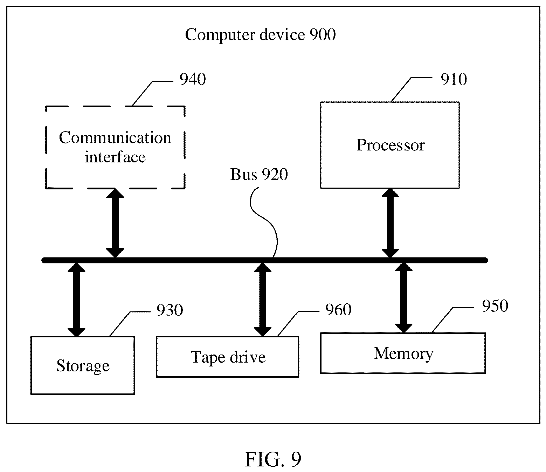

FIG. 9 is a diagram of a structure of a computer device 900 according to this application. As shown in FIG. 9, the computer device 900 includes a processor 910, a bus 920, a storage 930, a communication interface 940, a memory 950 (which may also be referred to as a main memory (main memory) unit), and a tape drive 960. The processor 910, the storage 930, the memory 950, and the communication interface 940 are connected through the bus 920.

It should be understood that, in this embodiment, the processor 910 may be a CPU, or the processor 910 may be another general-purpose processor, a digital signal processor (digital signal processing, DSP), an ASIC, an FPGA or another programmable logical device, a discrete gate or a transistor logical device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 940 is configured to implement communication between the computer device 900 and an external device or component.

The bus 920 may include a path, configured to transmit information between the foregoing components (for example, the processor 910, the memory 950, and the storage 930). In addition to a data bus, the bus 920 may further include a power bus, a control bus, a status signal bus, and the like. However, for clear description, various types of buses are marked as the bus 920 in the figure. The bus 920 may be a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL), a cache coherent interconnect for accelerators (cache coherent interconnect for accelerators, CCIX), or the like. The bus 920 may be classified into an address bus, a data bus, a control bus, and the like.

In an example, the computer device 900 may include a plurality of processors. The processor may be a multi-CPU (multi-CPU) processor. The processor herein may be one or more devices, circuits, and/or computing units configured to process data (for example, computer program instructions).

It should be noted that, FIG. 9 shows only an example in which the computer device 900 includes one processor 910 and one storage 930. The processor 910 and the storage 930 herein each indicate a type of device or component. In a specific embodiment, a quantity of each type of devices or components may be determined based on a service requirement.

The memory 950 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 930 may be a magnetic disk, for example, a hard disk drive or a solid state drive.

The tape drive 960 may be the integrated tape drive described in the foregoing embodiments.

The computer device 900 may be a general-purpose device or a dedicated device. For example, the computer device 900 may be an edge device (for example, a box carrying a chip with a processing capability), or the like. Optionally, the computer device 900 may alternatively be a server or another device having a computing capability.

This application provides a storage system. The storage system includes a processor and the tape drive described in the foregoing embodiments. The processor is configured to generate data, and the tape drive is configured to store data.

All or some of the foregoing embodiments may be implemented by software, hardware, firmware, or any combination thereof. When software is used to implement the embodiments, all or some of embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a tape, may be an optical medium, for example, a digital video disc (digital video disc, DVD), or may be a semiconductor medium, for example, a solid state drive (solid state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A tape drive, comprising:
a first take-up reel and a second take-up reel, wherein the first take-up reel and the second take-up reel are in a stacking layout, the first take-up reel and the second take-up reel are capable of rotating around respective rotation axes, the first take-up reel is capable of rotating around a first rotation axis, the second take-up reel is capable of rotating around a second rotation axis, and the first rotation axis and the second rotation axis coincide or do not coincide;
a tape body, wherein the first take-up reel and the second take-up reel are configured to wind the tape body, and when the first take-up reel and the second take-up reel rotate, the tape body is capable of being transported from the first take-up reel to the second take-up reel;
a tape header, disposed on a transport path of the tape body between the first take-up reel and the second take-up reel, wherein the tape header is configured to perform a read operation or a write operation on the tape body; and
roller structures, disposed on the transport path of the tape body between the first take-up reel and the second take-up reel, wherein the roller structure is configured to support the tape body, and the roller structure is further configured to gradually change a height of the tape body, for the height of the tape body to adapt to the first take-up reel and the second take-up reel.

2. The tape drive according to claim 1, wherein the roller structures comprise a first roller structure and a second roller structure;
in a direction of the first rotation axis, the first roller structure is disposed on one side of the tape header, and the second roller structure is disposed on the other side of the tape header;
the first roller structure is configured to support a part that is of the tape body and that is located between the tape header and the first take-up reel; and
the second roller structure is configured to support a part that is of the tape body and that is located between the tape header and the second take-up reel.

3. The tape drive according to claim 2, wherein the first roller structure comprises at least one roller disposed in parallel to the first rotation axis, and at least one roller disposed obliquely relative to the first rotation axis.

4. The tape drive according to claim 3, wherein the roller disposed obliquely relative to the first rotation axis comprises a first roller and a second roller;
a rotation axis of the first roller is parallel to a rotation axis of the second roller;
the tape body comprises a first surface and a second surface that are opposite to each other, and the first surface is closer to the first rotation axis than the second surface;
the first roller supports the first surface; and
the second roller supports the second surface.

5. The tape drive according to claim 4, wherein the roller disposed in parallel to the first rotation axis comprises a third roller and a fourth roller;
the first roller and the second roller are located between the third roller and the fourth roller;
the third roller supports the first surface; and
the fourth roller supports the first surface.

6. The tape drive according to any one of claims 3 to 5, wherein the at least one roller disposed in parallel to the first rotation axis is disposed around the first rotation axis, and the at least one roller disposed obliquely relative to the first rotation axis is disposed around the first rotation axis.

7. The tape drive according to claim 6, wherein a height of the at least one roller disposed in parallel to the first rotation axis is sequentially increased or decreased.

8. The tape drive according to claim 1, wherein
the tape body comprises a first surface and a second surface that are opposite to each other, and the first surface is closer to the first rotation axis than the second surface;
the second surface is provided with magnetic particles;
the first roller structure and the second roller structure each comprise a plurality of rollers; and
a quantity of rollers supporting the first surface is greater than a quantity of rollers supporting the second surface.

9. The tape drive according to claim 8, wherein the tape drive further comprises a tape header driver, the tape header driver is connected to the tape header, the tape header driver is configured to drive the tape header to move in a first direction, and the first direction is parallel to a width direction of the tape body;
the tape header is disposed on the second surface; and
the tape header driver is disposed on the first surface.

10. The tape drive according to any one of claims 1 to 9, wherein the tape drive further comprises:
a housing, wherein the first take-up reel, the second take-up reel, the tape body, the tape header, and the roller structures are all disposed in the housing, and the roller structures comprise the first roller structure and the second roller structure;
a plurality of corners are formed in the housing;
the first roller structure is located at a location that is in the housing and that is close to a first corner; and
the second roller structure is located at a location that is in the housing and that is close to the first corner.

11. The tape drive according to any one of claims 1 to 10, wherein the tape drive further comprises a first motor and a second motor;
the first motor is configured to drive the first take-up reel to rotate; and
the second motor is configured to drive the second take-up reel to rotate.

12. The tape drive according to claim 11, wherein
the first take-up reel is of a hollow structure, and the first motor is located in the first take-up reel; and
the second take-up reel is of a hollow structure, and the second motor is located in the second take-up reel.

13. A tape, comprising:
a first take-up reel, wherein the first take-up reel is capable of rotating around a first rotation axis, and the first take-up reel is configured to wind a tape body; and
the tape body, configured to record data, wherein the tape body comprises a fastening end and a moving end, the fastening end is fastened to the first take-up reel, and the moving end is configured to: when the tape is placed in a tape driver, to be connected to a second take-up reel in the tape driver.

14. The tape according to claim 13, wherein
when the tape is disposed in the tape driver, the first take-up reel and the second take-up reel are in a stacking layout, and the tape driver comprises the second take-up reel, a tape header, and roller structures;
the second take-up reel is configured to wind the tape body after the moving end is connected to the second take-up reel, wherein when the first take-up reel and the second take-up reel rotate, the tape body is capable of being transported from the first take-up reel to the second take-up reel;
the tape header is disposed on a transport path of the tape body between the first take-up reel and the second take-up reel, and the tape header is configured to perform a read operation or a write operation on the tape body; and
the roller structures are disposed on the transport path of the tape body between the first take-up reel and the second take-up reel, and the roller structure is configured to support the tape body.

15. A tape drive, wherein the tape drive comprises a tape mount port, a second take-up reel, a tape header, and roller structures;
the tape mount port is configured to: mount a tape into the tape drive or remove the tape from the tape drive, wherein the tape comprises a first take-up reel and a tape body, the first take-up reel is capable of rotating around a first rotation axis, and the first take-up reel is configured to wind the tape body;
the tape body is configured to record data, wherein the tape body comprises a fastening end and a moving end, the fastening end is fastened to the first take-up reel, and the moving end is configured to: when the tape is placed in the tape drive, to be connected to the second take-up reel;
when the tape is disposed in the tape drive, the first take-up reel and the second take-up reel are in a stacking layout;
the second take-up reel is configured to wind the tape body after the moving end is connected to the second take-up reel, wherein when the first take-up reel and the second take-up reel rotate, the tape body is capable of being transported from the first take-up reel to the second take-up reel;
the tape header is disposed on a transport path of the tape body between the first take-up reel and the second take-up reel, and the tape header is configured to perform a read operation or a write operation on the tape body; and
the roller structures are disposed on the transport path of the tape body between the first take-up reel and the second take-up reel, and the roller structure is configured to support the tape body.

16. A storage system, wherein the storage system comprises a processor and the tape drive according to any one of claims 1 to 12 and 15, the processor is configured to generate data, and the tape drive is configured to store the data.
